# EUROPEAN PATENT SPECIFICATION

(11) **EP 2 320 622 B1**
(45) Date of publication and mention of the grant of the patent: **25.12.2019**
(21) Application number: 09806340.7
(22) Date of filing: 28.07.2009
(51) Int. Cl.: H04L 29/06, G06F 16/00

(54) **REPORT FORM NORMALIZATION PROCESSING METHOD, APPARATUS AND SYSTEM**
VERFAHREN, VORRICHTUNG UND SYSTEM ZUR VERARBEITUNG VON BERICHTSFORMNORMALISIERUNG
PROCÉDÉ, APPAREIL ET SYSTÈME DE TRAITEMENT DE NORMALISATION DE FORMULAIRE DE RAPPORT

(30) Priority: 14.08.2008 CN 200810131396
(43) Date of publication of application: 11.05.2011
(73) Proprietor: ZTE Corporation, Shenzhen City, Guangdong Province 518057 (CN)
(72) Inventor: LI, Lili, Guangdong Province 518057 (CN); LV, Weichu, Guangdong Province 518057 (CN)
(74) Representative: Roos, Peter
(86) International application number: PCT/CN2009/072941
(87) International publication number: WO 2010/017737

(56) References cited:
- WO-A1-98/33131
- CA-A1- 2 510 633
- CN-A- 1 588 369
- CN-A- 101 216 817
- CN-A- 101 345 758
- US-A1- 2003 069 975
- US-A1- 2004 167 912
- US-B1- 6 715 080

## Description

### Filed of the Invention

The present invention relates to communication field, and in particular to a method, an apparatus, and a system for report form normalization processing.

### Background of the Invention

As the service traffic and the varieties of telecommunication value-added services are increased rapidly, operators have an increasing demand for a report form providing data of decision and statistic. Since different service systems might be developed independently by the respective factories, the types of the report form systems corresponding to the service systems differ from each other, which results in that there is no unified administrative authority among different report form systems.

When accessing a report form, a user needs to log into different report form systems for accessing different report forms. Sometimes, the report forms of a same report form system are even published in different report form servers. The control of user authority needs to be performed for one time when accessing a different report form system. Moreover, every time the user opens a browser for accessing a report form, a user name and a password need to be input for verification, thereby the number of the operation times of the user is increased, and the user needs to remember a plurality of log-in user names and passwords, thus the operation is complex and error prone.

Some report form system cancels the verification on the side of the report form server in order to satisfy user's friendly experience. In this way, the user, if knowing the accessing address of the report form system, could access the report form server directly in an anonymous manner without verifying the username and password. Although such a method reduces the complexity of operation for the user, a great potential safety hazard may be expected.

Document CA2510633A1 discloses a method wherein next to a gateway and a network firewall, an application firewall layered on top of an application is placed. The application firewall uses an authentication provider on a remote system to authenticate users and check user access control lists. Document US2003/069975A1 discloses a method wherein client requests such as business requests or stock queries are forwarded to one of multiple servers. It also discloses a security accelerator which encrypts outgoing messages and/or decrypts incoming messages received from a network.

Document US6715080B1 discloses a middleware system in a client/server computing environment which accepts requests to the correct place on the server side, then passes a response from the server side back to the client side. It also discloses a security service which processes user-id authentication requests and, if successful, calls an end service for that user.

### Summary of the Invention

The present invention defines a method according to claim 1 and an apparatus according to claim 6. Further embodiments are set forth in the dependent claims 2-5 and 7-9.

The present invention is proposed in consideration of the problem present in the related art that the operation of a user is complicated of since there is no unified administrative authority among different report form systems. Therefore, the main object of the present invention is to provide a method, an apparatus, and a system for report form normalization processing, so as to solve the above problem.

A method for report form normalization processing is provided according to one aspect of the present invention.

The method for report form normalization processing according to the present invention comprises: a normalization system server obtaining a report form request sent by a user equipment, wherein the report form request carries a report form name requested by a user; and the normalization system server sending a report form content request to a report form server corresponding to the report form name, to obtain a report form requested by the user, wherein the report form content request carries the report form name, an IP address of the report form server, a port number of the report form server, and an access protocol corresponding to the report form server.

Further, this method also comprises: the normalization system server obtaining authentification information from the user equipment; and the normalization system server judging whether the user is a legal user according to the authentification information, accepting the report form request in the case that the user is a legal user, and refusing the report form request in the case that the user is an illegal user, wherein the above authentification information includes a user name and a password.

In the above, in the case that the user is a legal user, the above method, before sending the report form content request, further comprises: the normalization system server sending a security authentification request to the report form server corresponding to the report form name, to request the report form server to perform security authentification on the user; wherein the security authentification request carries the authentification information of the user; performing an operation of sending the report form content request to the report form server corresponding to the report form name in the case that the authentification is successful.

Preferably, this method further comprises: the report form server searching for corresponding report form contents according to the report form content request and sending the report form contents found to the normalization system server; and the normalization system server obtaining the report form contents, integrating the report form contents according to a predetermined rule, and presenting to the user the report form contents integrated.

Preferably, this method further comprises: the normalization system server presetting for the user one or more report form names for which the user has access authority.

An apparatus for report form normalization processing is provided according to another aspect of the present invention.

The apparatus for report form normalization processing according to the present invention comprises: obtaining means, configured to obtain a report form request sent by a user equipment, wherein the report form request carries a report form name requested by a user; and processing means, configured to send a report form content request to a report form server corresponding to the report form name, to obtain a report form requested by the user; wherein the report form content request carries the report form name, an IP address of the report form server, a port number of the report form server, and an access protocol corresponding to the report form server..

Preferably, this apparatus for report form normalization processing further comprises: setting means, configured to perform a control of access authority on all the report forms and to set for different users one or more report form names for which the user has access authority; authentification proxy means, configured to analyze the report form content request to obtain a corresponding report form server and an IP address and a port number of the report form server, and to perform security authentification on the user in the case that the report form server needs performing the security authentification; and first content regularization means, configured to obtain the report form content request and to arrange the report form content request as the request contents which are identified by the report form server, according to a predetermined algorithm and protocol.

Preferably, the above apparatus for report form normalization processing further comprises: analyzing means, configured to obtain report form response contents returned by the report form server and to analyze and arrange the report form response contents; second content regularization means, configured to arrange the report form response contents as the report form contents which are identified by the user, according to a predetermined rule; and conversion means, configured to convert the report form contents according to a user interface request and to present them to the user.

A system for report form normalization processing is provided according to another aspect of the present invention.

The system for report form normalization processing according to the present invention comprises a normalization system server and one or more report form servers, wherein the normalization system server may be the above apparatus for report form normalization processing.

By means of at least one technical solution of the present invention mentioned above, the problem is solved regarding inconvenience brought by dispersive management and browsing resulting from multiple kinds of report form systems to a user. By setting a unified administrative authority for the multiple report form systems, the operation process of the user can be simplified, the user's experience is improved, and the security of the system can be improved simultaneously.

### Brief Description of the Drawings

The drawings are used to provide a further understanding of the present invention and form a part of the Description. The drawings are used to explain the present invention together with the embodiments of the present invention, without unduly limiting the present invention, wherein:
Fig. 1 is a flow chart of a method for report form normalization processing according to a method embodiment of the present invention;
Fig. 2 is a detailed flow chart of a method for report form normalization processing according to a method embodiment of the present invention;
Fig. 3 is a structural block diagram of an apparatus for processing a report form in normalization according to an apparatus embodiment of the present invention;
Fig. 4 is a detailed structural block diagram of an apparatus for processing a report form in normalization according to an apparatus embodiment of the present invention; and
Fig. 5 is a structural block diagram of a system for processing a report form in normalization according to a system embodiment of the present invention.

### Detailed Description of Embodiments

### Function Overview

At present, since there is no unified administrative authority among different report form systems, there is a need to integrate multiple kinds of report form systems and to provide a unified operation interface and security authentification for a user. The present invention will be described hereinafter in further details.

### Method Embodiments

A method for report form normalization processing is provided according to an embodiment of the present invention.

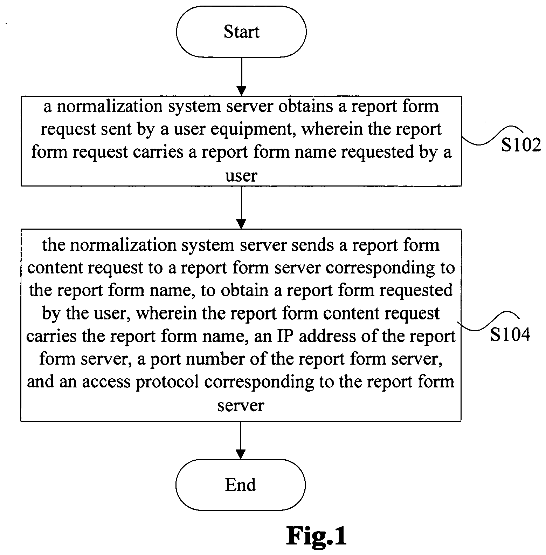

Fig. 1 is a flow chart of a method for report form normalization processing according to an embodiment of the present invention. As shown in Fig. 1, this method comprises the following steps S102 to S104.

Step S102: a normalization system server obtains a report form request sent by a user equipment, wherein the report form request carries a report form name requested by a user.

Step S104: the normalization system server sends a report form content request to a report form server corresponding to the report form name, to obtain a report form requested by the user;, wherein the report form content request carries the report form name, an IP address of the report form server, a port number of the report form server, and an access protocol corresponding to the report form server.

By means of the technical solution provided by the embodiment of the present invention, the problem is solved regarding inconvenience brought by dispersive management and browsing resulting from multiple kinds of report form systems to a user. By means of the present invention, the operation process of the user can be simplified, the user's experience is improved, and the security of the system can be increased simultaneously.

Further, before executing Step S102, the following is also comprised: the normalizing system server obtaining authentification information from the user equipment; and the normalizing system server judging whether the user is a legal user according to the authentification information, accepting the report form request in the case that the user is a legal user, and refusing the report form request in the case that the user is an illegal user. Wherein the normalizing system server may also preset for the user one or more report form names for which the user has access authority; wherein the authentification information may include a user name and a password.

Preferably, in the case that the user is a legal user, the method, before sending the report form content request, also comprises: the normalization system server sending a security authentification request to the report form server corresponding to the report form name, to request the report form server to perform security authentification on the user, wherein the security authentification request carries the authentification information of the user; performing an operation of sending the report form content request to the report form server corresponding to the report form name in the case that the authentification is successful.

Further, the method also comprises: the report form server searching for corresponding report form contents upon the report form content request and sending the report form contents found to the normalization system server; and the normalization system server obtaining the report form contents, integrating the report form contents according to a predetermined rule, and presenting to the user the report form contents integrated.

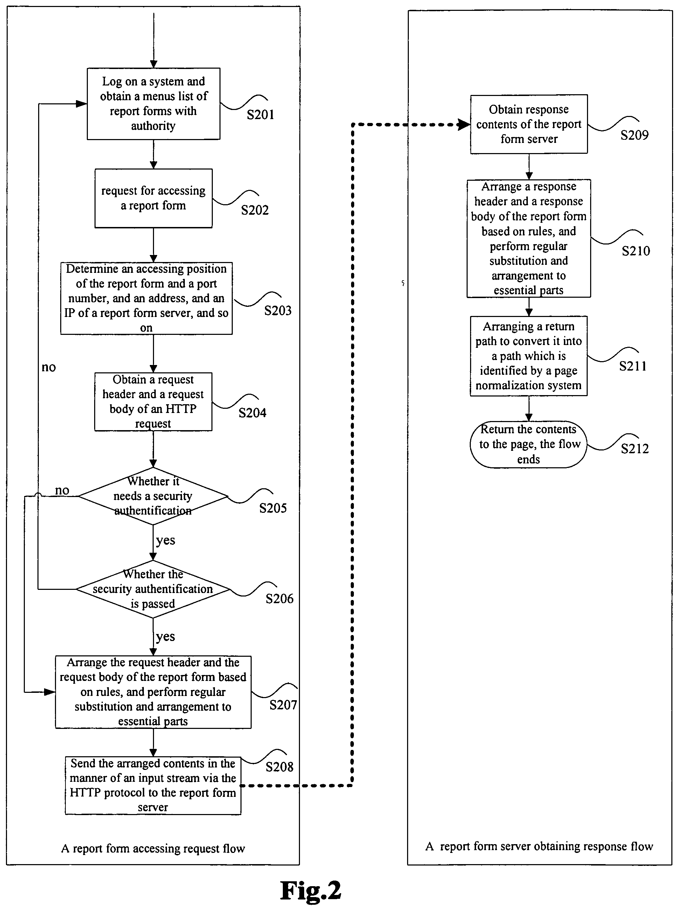

Fig. 2 is a detailed flow chart of a method for report form normalization processing according to a method embodiment of the present invention. As shown in Fig. 2, this method comprises the following steps from S201 to S212.

Step S201: the user logs on the normalization system server with the preset user name and password to obtain a pre-assigned report form menu; wherein the report form menu(s) with authority is(are) displayed on an interface, while the report form menu(s) without authority granted is(are) not displayed on the interface.

Step S202: the user clicks a report form menu to be accessed on the interface, to send a report form request.

Step S203: the above normalization system server determines the report form to be accessed according to the report form request sent by the user and intrinsic parameters, obtains the name corresponding to this report form and actually published on the report form server, and accesses a corresponding report form server.

If the normalization system server is connected to a plurality of report form servers, a report form to be accessed is determined based on the intrinsic parameters and the obtained system configuration, and a report form server corresponding to this report form is obtained, to determine the specific information of this report form server, viz. the IP address of this report form server, the accessible port number, the set user name and password with which the report form server can be accessed, an so on. The link path information for directly accessing a corresponding report form on the report form server is sorted out according to the above information, and jumping is performed.

Step S204: the request information is captured before jumping to the link to the report form server, the specific contents of the report form request is obtained, and a request analysis is performed.

Step S205: it is judged whether the corresponding report form server needs to perform security authentification according to the configuration information, wherein if it needs to perform the security authentification, Step S206 is executed; if it does not need to perform the security authentification, Step S207 is executed.

Step S206: a corresponding authentification algorithm is performed based on a preset security authentification method, wherein the security authentification method can be dealt with based on the a specific configuration of the report form server, for example, by Basic authentification, viz. by performing the Basic authentification on the IP address, the port number, the user name and the password of the report form server via an algorithm, wherein if the obtained information is erroneous, the security authentification fails, at this time, the system will feed back prompting information of authentification failure to a user access interface, to inform user(s) that the configuration is incorrect which results in the authentification failure; if the obtained information is correct, the security authentification succeeds, and Step S207 is executed.

Step S207: the normalization system server performs, according to the obtained request header and request body, and a rule, regular substitution and regularization on the above mentioned request header and the request body, i.e., the information contained in the request header and the request body is converted into contents which can be identified by the report form server; wherein the request body carries the report form name, the IP address of the report form server, the port number of the report form server, and the access protocol corresponding to the report form server.

Step S208: the arranged contents is reassigned to the request header and the request body, and the reassigned request header and request body are sent to the report form server via a POST mode, to request corresponding report form contents.

Step 209: response information of the report form server for the request is obtained after the request is sent, and response contents is obtained.

Step S210: a regular substitution and regularization is performed to essential parts as for the obtained request header and request body of the report form according to rules, for example, the partial contents of the report form server contained in a response header and a response body need to be replaced as the contents of the present system.

Step S211: a return path is rearranged, a jumping page is converted into a page path of the present system, and thus the path is still a relative path of the present system when assessing other report forms next time, and the present system is still entered for processing upon jumping.

Step 212: the report form contents are returned to the user interface, and the user obtains desired report form contents by browsing the user interface.

By following the above implementation steps, the problem is solved regarding inconvenience brought by dispersive management and browsing resulting from multiple kinds of report form systems to a user. By means of the present invention, the operation process of the user can be simplified, the user's experience is improved, and the security of the system can be increased simultaneously.

A computer readable medium is also provided according to an embodiment of the present invention, wherein this computer readable medium stores computer executable instructions. When the instructions are executed by a computer or a processor, the computer or processor is made to perform the processing of respective steps as shown in Fig. 1 and Fig. 2. Preferably, the above method embodiments can be performed.

### Apparatus embodiments

An apparatus for report form normalization processing is provided according to an embodiment of the present invention.

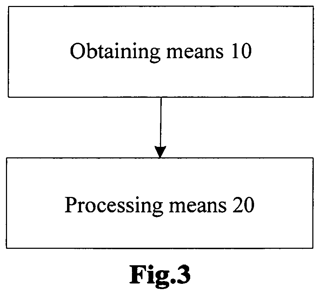

Fig. 3 is a structural block diagram of an apparatus for report form normalization processing according to an embodiment of the present invention. As shown in Fig. 3, this apparatus comprises:
obtaining means 10, configured to obtain a report form request sent by a user equipment, wherein the report form request carries a report form name requested by a user; and
processing means 20, configured to send a report form content request to a report form server corresponding to the report form name, to obtain a report form requested by the user, wherein the report form content request carries the report form name, an IP address of the report form server, a port number of the report form server, and an access protocol corresponding to the report form server. This means may be connected to the obtaining means 10.

In addition, the report form normalization processing apparatus also comprises setting means, authentification proxy means, first content regularization means, analyzing means, second content regularization means, and conversion means. The functions of the respective modules above are described hereinafter.

The setting means is configured to perform a control of access authority on all the report forms and to set for different users one or more report form names for which the user has access authority; the processing means is configured to determine, when the user assesses a report form menu, a corresponding requested report form via a distributing means; the authentification proxy means is configured to analyze the report form content request to obtain a corresponding report form server and an IP address and a port number of the report form server, and to perform security authentification on the user in the case that the report form server needs performing the security authentification; the first content regularization means is configured to obtain the report form content request and to arrange the report form content request as the request contents which are identified by the report form server, according to a predetermined algorithm and protocol; the analyzing means is configured to obtain report form response contents returned by the report form server and to analyze and arrange the report form response contents; the second content regularization means is configured to analyze and arrange, according to a predetermined rule, the report form response contents, so as to arrange the same as the report form contents which are identified by the user; and the conversion means is configured to convert the report form contents according to a user interface request and to present them to the user.

By means of the apparatus for report form normalization processing provided by the embodiment of the present invention, the problem is solved regarding inconvenience brought by dispersive management and browsing resulting from multiple kinds of report form systems to a user. By means of the present invention, the operation process of the user can be simplified, the user's experience is improved, and the security of the system can be increased simultaneously. Moreover, no change is brought to the subject part displayed by the report form, including specific report form conditions, data contents, style and variety. By virtue of the present invention, the contents displayed by the report form server can be displayed as they are after passing through the normalization processing apparatus, and they are transparent for the user to use.

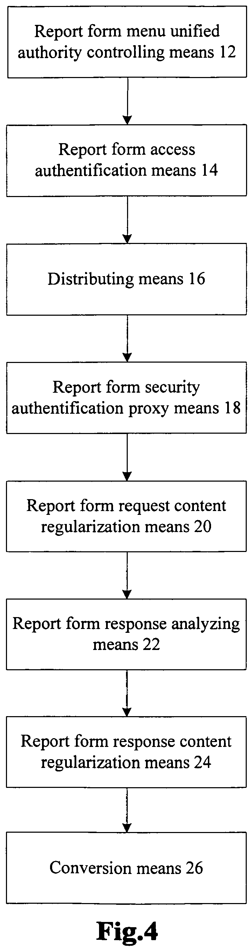

Fig. 4 is a detailed structural block diagram of an apparatus for report form normalization processing according to an embodiment of the present invention. As shown in Fig. 4, this apparatus comprises:
report form menu unified authority controlling means 12, configured to perform a control of access authority on all the report form menus and to allocate different report form accessing authorities for different users;
report form access authentification means 14, configured to determines, when a user's access occur, what kinds of report forms the user is granted with access authority and to display the report forms to a user interface;
report form access distributing means 16, configured to determines a corresponding requested report form when the user accesses the report form menu;
report form security authentification proxy means 18, configured to analyze the request of the report form, so as to obtain useful information in the request, such as, which report form server shall be accessed, the port number and the IP address of the corresponding report form server, wherein a security authentification on the report form server is performed based on a specific authentification method and an actual report form server authentification protocol organization if the report form server needs the security authentification, and such an authentification is transparent for the user;
report form request content regularization means 20, configured to obtain the request contents of the report form, and to regularize the contents by different algorithms and a necessary protocol conversion as request contents which can be identified by an actual report form server;
report form response analyzing means 22, wherein after accessing the report form server, the means obtains report form response contents to perform analysis and regularization, after the server returns corresponding response information based on the request contents;
report form response content regularization means 24, configured to analyze and regularize the received report form response, including the report form conditions, the report form data, and the like, and to arrange the same as response contents required by a user request page based on specific rules; and
conversion means 26, configured to convert the arranged report form response into a manner requested by a user interface for being displayed to the interface, and to ensure that a next access initiated by the user from the interface is correctly sent to the system of the present invention,
in the above, the report form menu unified authority controlling means 12, the report form access authentification means 14, the report form access distributing means 16, the report form security authentification proxy means 18, and the report form request content regularization means 20 are the means relating to processing a user request, and the report form response analyzing means 22, the report form response content regularization means 24, and the conversion means 26 are the means relating to processing a response of a report form server.

The apparatus for report form normalization processing as shown in Fig. 4 will be used in the following to describe in detail the case that a web page accesses a report form server via the HTTP protocol.

First, an administrator uses the report form menu unified authority controlling means 12 to allocate the authority of assessing a report form for a user.

A user logs on the report form normalization system and performs a report form authentification via the report form access authentification means 14, to obtain a menu list of report forms accessible to the user. As for the report forms with no authority granted, they are not displayed in the menu and the user does not know there are also other report forms.

The user clicks a menu item of the report form to enter the report form access distributing means 16 for obtaining the requested report form. The report form access distributing means 16 arranges the information of the report form server set by the system and the requested parameters of the report form, to determine the position where the report form is located and the path and the name of the report form of a corresponding report form server. The network information of respective report form servers are known in advance, wherein the network information may include the IP address, the port number, and the report form published by the report form server. Moreover, the network information can be managed by configuration. The configuration information is stored in the system memory for use after being read by the report form access distributing means 16. In addition, the report form access distributing means 16 may record the accessing logs.

Accessing can be realized according to the HTTP protocol after obtaining the report form path. A request analysis is made via the report form security authentification proxy means 18. The contents of the request body and the request header are obtained via an input stream carried in the HTTP protocol and are authenticated according to the manner of security authentification required by the report form server. The manners of security authentification of respective report forms might be different, for example, the security authentification can be performed via the port number, the IP address of the report form server to be accessed, or the accessible allocated user name and password. If the security authentification is passed, the processing can be continued, otherwise, a user request page is returned to inform the user of the failure in passing the security authentification.

The report form request content regularization means 20 arranges, after the request body and the request header is obtained and the security authentification is passed, the obtained request contents, so as to make the request contents as request contents which can be identified by the report form server. The specific method is: part of the contents of the obtained request body and the request header are substituted and arranged based on predetermined rules. After the arrangement is finished, the arranged request contents are sent the report form server in a manner of the HTTP protocol, viz. sending a report form request (viz. the report form content request described above) to the report form server.

The report form server returns, after obtaining the above report form request, response contents (viz. the report form contents described above) to an entity sending the request, wherein the response contents carry the output streams of a response body and a response header. The report form response analyzing means 22 receives the response contents and obtains the output streams of the response body and the response header.

After obtaining the above response contents, the report form response content regularization means 24 arranges the response header and the response body, and converts, according to the rules of the report form normalization apparatus, part of contents of a message body and a message header into contents which can be identified on a user interface of the report form normalization apparatus.

The conversion means 26 arranges the contents converted by the report form response content regularization means 24, arranges the return path of the user interface, and returns the arranged contents in the manner of the output stream to the user page for displaying.

### System embodiments

A system for report form normalization processing is provided according to an embodiment of the present invention, wherein the system comprises a normalization system server and one or more report form servers, wherein the normalization system server may be the apparatus for report form normalization processing as shown in Fig. 3.

By means of the system for report form normalization processing provided by the embodiment of the present invention, the problem is solved regarding inconvenience brought by dispersive management and browsing resulting from multiple kinds of report form systems to a user. By means of the present invention, the operation process of the user can be simplified, the user's experience is improved, and the security of the system can be increased simultaneously. Moreover, the report forms of multiple kinds of report form servers can be exhibited on one platform, and accessing different report form servers safely can be realized by an internal conversion process and a method of security judgment.

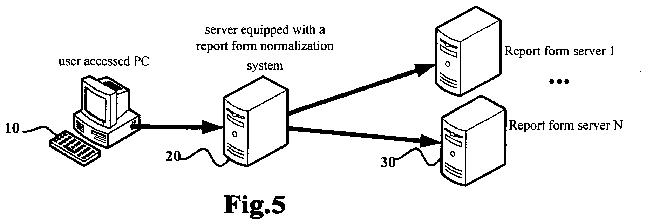

Fig. 5 shows a schematic diagram of network allocation in which a system for report form normalization processing provided by the embodiment of the present invention performs service processing. As shown in Fig. 5, the user can log into a server equipped with a system for report form normalization processing via a PC computer and access the report forms of one or more report form servers via the system for report form normalization processing. Specifically, the user can click to enter the system for report form normalization processing via browsing the report form menu, and obtain the report form contents corresponding to the report form server via the HTTP protocol. The contents are processed by the system for report form normalization processing for displaying the final report form on the browser of the user.

As described above, be means of the method, the apparatus and the system for report form normalization processing provided by the present invention, the problem is solved regarding inconvenience brought by dispersive management and browsing resulting from multiple kinds of report form systems to a user. By means of the present invention, the operation process of the user can be simplified, the user's experience is improved, and the security of the system can be increased simultaneously. Moreover, the problem is also solved that the report forms of a plurality of report form servers can be accessed through a unified interface. As for the security authentification of the report form, a transparent operation is realized for a common user, the user's operation experience is enhanced and the security is improved simultaneously.

In addition, the system architecture and the current processing flow are not changed for realizing the present invention. The present invention is easy to realize, is suitable for popularization in the technical field, and has a higher industrial practicability.

## Claims

1. A method for report form normalization processing, comprising:
obtaining by a normalization system server a report form request sent by a user equipment, wherein the report form request carries a report form name requested by a user; and
sending by the normalization system server a report form content request to a report form server corresponding to the report form name, to obtain a report form requested by the user,
wherein the report form content request carries the report form name, an IP address of the report form server, a port number of the report form server, and an access protocol corresponding to the report form server;
**characterised in that** the method further comprises: presetting by the normalization system server for the user one or more report form names for which the user has access authority.

2. The method according to Claim 1, **characterized in that** the method also comprises:
obtaining by normalization system server authentification information from the user equipment; and
judging by the normalization system server whether the user is a legal user according to the authentification information, accepting by the normalization system server the report form request in the case that the user is a legal user, and refusing by the normalization system server the report form request in the case that the user is an illegal user.

3. The method according to Claim 2, **characterized in that** in the case that the user is a legal user, the method, before sending the report form content request, further comprises:
sending by the normalization system server a security authentification request to the report form server corresponding to the report form name, to request the report form server to perform security authentification on the user, wherein the security authentification request carries the authentification information of the user;
performing an operation of sending the report form content request to the report form server corresponding to the report form name in the case that the authentification is successful.

4. The method according to Claim 1, **characterized in that** the method further comprises:
searching by the report form server for corresponding report form contents according to the report form content request and sending by the report form server the report form contents found to the normalization system server; and
obtaining by the normalization system server the report form contents, integrating by the normalization system server the report form contents according to a predetermined rule, and presenting by the normalization system server to the user the report form contents integrated.

5. The method according to any one of Claims 1 to 4, **characterized in that** the authentification information includes a user name and a password.

6. An apparatus for report form normalization processing, comprising:
obtaining means, configured to obtain a report form request sent by a user equipment, wherein the report form request carries a report form name requested by a user; and
processing means, configured to send a report form content request to a report form server corresponding to the report form name, to obtain a report form requested by the user, wherein the report form content request carries the report form name, an IP address of the report form server, a port number of the report form server, and an access protocol corresponding to the report form server.;
wherein the apparatus for report form normalization processing further comprises: setting means, configured to perform a control of access authority on all the report forms and to preset for different users one or more report form names for which the user has access authority.

7. The apparatus according to Claim 6, **characterized in that** the apparatus for report form normalization processing further comprises:
authentification proxy means, configured to analyze the report form content request to obtain a corresponding report form server and an IP address and a port number of the report form server, and to perform security authentification on the user in the case that the report form server needs performing the security authentification; and
first content regularization means, configured to obtain the report form content request and to arrange the report form content request as the request contents which are identified by the report form server, according to a predetermined algorithm and protocol.

8. The apparatus according to Claim 7, **characterized in that** the apparatus for report form normalization processing further comprises:
analyzing means, configured to obtain report form response contents returned by the report form server and to analyze and arrange the report form response contents;
second content regularization means, configured to arrange the report form response contents as the report form contents which are identified by the user, according to a predetermined rule; and
conversion means, configured to convert the report form contents according to a user interface request and to present them to the user.

9. A system for report form normalization processing, **characterized in that** the system comprises a normalization system server and one or more report form servers, wherein the normalization system server is the apparatus for report form normalization processing according to any one of Claims 6 to 8.

## Patentansprüche

1. Verfahren zur Verarbeitung von Berichtsformularnormalisierung, umfassend:
Erhalten, durch einen Normalisierungssystemserver, einer von einer Benutzerausrüstung gesendeten Berichtsformularanforderung, wobei die Berichtsformularanforderung einen von einem Benutzer angeforderten Berichtsformularnamen trägt; und
Senden, durch den Normalisierungssystemserver, einer Berichtsformularinhaltsanforderung an einen Berichtsformularserver, der dem Berichtsformularnamen entspricht, um ein von dem Benutzer angeforderten Berichtsformular zu erhalten,
wobei die Berichtsformularinhaltsanforderung den Berichtsformularnamen, eine IP-Adresse des Berichtsformularservers, eine Portnummer des Berichtsformularservers, und ein dem Berichtsformularserver entsprechendes Zugriffsprotokoll trägt;
**dadurch gekennzeichnet, dass** das Verfahren ferner umfasst:
Voreinstellen, durch den Normalisierungssystemserver, eines oder mehrerer Berichtsformularnamen für den Benutzer, für die der Benutzer eine Zugriffsberechtigung besitzt.

2. Verfahren nach Anspruch 1, **dadurch gekennzeichnet, dass** das Verfahren auch umfasst:
Erhalten, durch den Normalisierungssystemserver, einer Authentifizierungsinformation von der Benutzerausrüstung; und
Beurteilen, durch den Normalisierungssystemserver, ob der Benutzer ein legaler Benutzer ist, gemäß der Authentifizierungsinformation, Akzeptieren, durch den Normalisierungssystemserver, der Berichtsformularanforderung, in dem Fall, dass der Benutzer ein legaler Benutzer ist, und Verweigern durch den Normalisierungssystemserver, der Berichtsformularanforderung, in dem Fall, dass der Benutzer ein illegaler Benutzer ist.

3. Verfahren nach Anspruch 2, **dadurch gekennzeichnet, dass** in dem Fall, dass der Benutzer ein legaler Benutzer ist, das Verfahren vor dem Senden der Berichtsformularinhaltsanforderung ferner umfasst:
Senden, durch den Normalisierungssystemserver, einer Sicherheitsauthentifizierungsanforderung an den Berichtsformularserver, der dem Berichtsformularnamen entspricht, um den Berichtsformularserver aufzufordern, eine Sicherheitsauthentifizierung für den Benutzer durchzuführen, wobei die Sicherheitsauthentifizierungsanforderung die Authentifizierungsinformation des Benutzers trägt;
Durchführen einer Operation zum Senden der Berichtsformularinhaltsanforderung an den Berichtsformularserver, der dem Berichtsformularnamen entspricht, in dem Fall, dass die Authentifizierung erfolgreich ist.

4. Verfahren nach Anspruch 1, **dadurch gekennzeichnet, dass** das Verfahren ferner umfasst:
Suchen, durch den Berichtsformularserver, nach entsprechenden Berichtsformularinhalten gemäß der Berichtsformularinhaltsanforderung, und Senden, durch den Berichtsformularserver, der gefundenen Berichtsformularinhalte an den Normalisierungssystemserver; und
Erhalten, durch den Normalisierungssystemserver, des Berichtsformularinhalts, Integrieren, durch den Normalisierungssystemserver, des Berichtsformularinhalts gemäß einer vorbestimmten Regel, und Präsentieren, durch den Normalisierungssystemserver, der integrierten Berichtsformularinhalte dem Benutzer.

5. Verfahren nach einem der Ansprüche 1 bis 4, **dadurch gekennzeichnet, dass** die Authentifizierungsinformation einen Benutzernamen und ein Passwort aufweist.

6. Vorrichtung zur Verarbeitung von Berichtsformularnormalisierung, umfassend:
Erlangungsmittel, die konfiguriert sind, eine von einer Benutzerausrüstung gesendete Berichtsformularanforderung zu erhalten, wobei die Berichtsformularanforderung einen von einem Benutzer angeforderten Berichtsformularnamen trägt; und
Verarbeitungsmittel, die konfiguriert sind, eine Berichtsformularinhaltsanforderung an einen Berichtsformularserver zu senden, der dem Berichtsformularnamen entspricht, um ein von dem Benutzer angefordertes Berichtsformular zu erhalten, wobei die Berichtsformularinhaltsanforderung den Berichtsformularnamen, eine IP-Adresse des Berichtsformularservers, eine Portnummer des Berichtsformularservers, und ein dem Berichtsformularserver entsprechendes Zugriffsprotokoll trägt;
wobei die Vorrichtung zur Verarbeitung von Berichtsformularnormalisierung ferner umfasst:
Einstellmittel, die dazu konfiguriert sind, eine Zugriffsberechtigungssteuerung für alle Berichtsformulare durchzuführen und für unterschiedliche Benutzer einen oder mehrere Berichtsformularnamen, für die der Benutzer eine Zugriffsberechtigung besitzt, voreinzustellen.

7. Vorrichtung nach Anspruch 6, **dadurch gekennzeichnet, dass** die Vorrichtung zur Verarbeitung von Berichtsformularnormalisierung ferner umfasst:
Authentifizierungs-Proxy-Mittel, die konfiguriert sind, die Berichtsformularinhaltsanforderung zu analysieren, um einen entsprechenden Berichtsformularserver und eine IP-Adresse und eine Portnummer des Berichtsformularservers zu erhalten, und um eine Sicherheitsauthentifizierung für den Benutzer durchzuführen, in dem Fall, dass der Berichtsformularserver eine Durchführung der Sicherheitsauthentifizierung benötigt; und
erste Inhaltsregulierungsmittel, die konfiguriert sind, die Berichtsformularinhaltsanforderung zu erhalten, und die Berichtsformularinhaltsanforderung als die Anforderungsinhalte, die von dem Berichtsformularserver identifiziert werden, gemäß einem vorbestimmten Algorithmus und Protokoll anzuordnen.

8. Vorrichtung nach Anspruch 7, **dadurch gekennzeichnet, dass** die Vorrichtung zur Verarbeitung von Berichtsformularnormalisierung ferner umfasst:
Analysemittel, die konfiguriert sind, von dem Berichtsformularserver zurückgegebene Berichtsformularantwortinhalte zu erhalten, und die Berichtsformularantwortinhalte zu analysieren und anzuordnen;
zweite Inhaltsregulierungsmittel, die konfiguriert sind, die Berichtsformularantwortinhalte als die von den dem Benutzer identifizierten Berichtsformularinhalte gemäß einer vorbestimmten Regel anzuordnen; und
Konvertierungsmittel, die konfiguriert sind, die Berichtsformularinhalte gemäß einer Benutzerschnittstellenanforderung zu konvertieren und dem Benutzer zu präsentieren.

9. System zur Verarbeitung von Berichtsformularnormalisierung, **dadurch gekennzeichnet, dass** das System einen Normalisierungssystemserver und einen oder mehrere Berichtsformularserver umfasst, wobei der Normalisierungssystemserver die Vorrichtung zur Verarbeitung von Berichtsformularnormalisierung nach einem der Ansprüche 6 bis 8 ist.

## Revendications

1. Procédé de traitement de normalisation d'un formulaire de rapport, comprenant de :
obtenir par un serveur de système de normalisation une demande de formulaire de rapport envoyée par un équipement d'utilisateur, dans lequel la demande de formulaire de rapport porte un nom de formulaire de rapport demandé par un utilisateur ; et
envoyer par le serveur de système de normalisation une demande de contenu de formulaire de rapport à un serveur de formulaire de rapport correspondant au nom de formulaire de rapport afin d'obtenir un formulaire de rapport demandé par l'utilisateur,
dans lequel la demande de contenu de formulaire de rapport porte le nom de formulaire de rapport, une adresse IP du serveur de formulaire de rapport, un numéro de port du serveur de formulaire de rapport et un protocole d'accès correspondant au serveur de formulaire de rapport ;
**caractérisé en ce que** le procédé comprend en outre de :
prérégler par le serveur de système de normalisation pour l'utilisateur un ou plusieurs noms de formulaire de rapport pour lesquels l'utilisateur a une autorité d'accès.

2. Procédé selon la revendication 1, **caractérisé en ce que** le procédé comprend en outre de :
obtenir par un serveur de système de normalisation une information d'authentification provenant de l'équipement d'utilisateur ; et
estimer par le serveur de système de normalisation si l'utilisateur est un utilisateur légal selon l'information d'authentification, accepter par le serveur de système de normalisation la demande de formulaire de rapport au cas ou l'utilisateur est un utilisateur légal et refuser par le serveur de système de normalisation la demande de formulaire de rapport au cas où utilisateur est un utilisateur illégal.

3. Procédé selon la revendication 2, **caractérisé en ce que** au cas où l'utilisateur est un utilisateur légal, le procédé, avant l'envoi de la demande de contenu de formulaire de rapport, comprend en outre de :
envoyer par le serveur de système de normalisation une demande d'authentification de sécurité au serveur de formulaire de rapport correspondant au nom de formulaire de rapport, afin de demander au serveur de formulaire de rapport d'effectuer une authentification de sécurité sur l'utilisateur, dans lequel la demande d'authentification de sécurité porte l'information d'authentification de l'utilisateur ;
effectuer une opération d'envoi de la demande de contenu de formulaire de rapport au serveur de formulaire de rapport correspondant au nom de formulaire de rapport au cas où l'authentification a réussi.

4. Procédé selon la revendication 1, **caractérisé en ce que** le procédé comprend en outre de :
rechercher par le serveur de formulaire de rapport des contenus de formulaire de rapport correspondants conformément à la demande de contenu de formulaire de rapport et envoyer par le serveur de formulaire de rapport les contenus du formulaire de rapports trouvés au serveur de système de normalisation ; et
obtenir par le serveur de système de normalisation le contenu de formulaire de rapport, intégrer par le serveur de normalisation les contenus de formulaire de rapport conformément à une règle prédéterminée et présenter par le serveur de système de normalisation à l'utilisateur les contenus de formulaire de rapport intégrés.

5. Procédé selon une quelconque des revendications 1 à 4, **caractérisé en ce que** l'information d'authentification inclut un nom d'utilisateur et un mot de passe.

6. Dispositif de traitement de normalisation de formulaire de rapport, comprenant :
un moyen d'obtention, configuré pour obtenir une demande de formulaire de rapport envoyée par un équipement d'utilisateur, dans lequel la demande de formulaire de rapport porte un nom de formulaire de rapport demandé par un utilisateur ; et
un moyen de traitement, configuré pour envoyer une demande de contenu de formulaire de rapport à un serveur de formulaire de rapport, correspondant au nom de formulaire de rapport, afin d'obtenir un formulaire de rapport demandé par l'utilisateur, dans lequel la demande de contenu de formulaire de rapport porte le nom de formulaire de rapport, une adresse IP du serveur de formulaire de rapport, un numéro de port du serveur de formulaire de rapport et un protocole d'accès correspondant au serveur de formulaire de rapport ;
dans lequel le dispositif de traitement de normalisation de formulaire de rapport comprend en outre un moyen de réglage, configuré pour effectuer un contrôle de l'autorité d'accès sur tous les formulaires de rapport et prérégler pour différents utilisateurs un ou plusieurs noms de formulaire de rapport pour lesquels l'utilisateur a une autorité d'accès.

7. Dispositif selon la revendication 6, **caractérisé en ce que** le dispositif de traitement de normalisation de formulaire de rapport comprend en outre :
un moyen de serveur proxy d'authentification, configuré pour analyser la demande de contenu de formulaire de rapport afin d'obtenir un serveur de formulaire de rapport correspondant et une adresse IP et un numéro de port du serveur de formulaire de rapport, effectuer une authentification de sécurité sur l'utilisateur en cas où le serveur de formulaire de rapport besoin d'effectuer l'authentification de sécurité ; et
un premier moyen de régularisation de contenu, configuré pour obtenir la demande de contenu de formulaire de rapport et disposer la demande de contenu de formulaire de rapport comme les contenus demandés qui sont identifiés par le serveur de formulaire rapport, conformément à un algorithme et un protocole prédéterminé.

8. Dispositif selon la revendication 7, **caractérisé en ce que** le dispositif de traitement de normalisation de formulaire rapport comprend en outre :
un moyen d'analyse, configuré pour obtenir des contenus de réponse de formulaire de rapport renvoyés par le serveur de formulaire de rapports et analyser et disposer les contenus de réponse de formulaire de rapport ;
un second moyen de régularisation de contenu, configuré pour disposer les contenus de réponse de formulaire de rapport comme les contenus de formulaire de rapports qui sont identifiés par l'utilisateur, conformément à une règle prédéterminée ; et
un moyen de conversion, configuré pour convertir les contenus de formulaire de rapport selon une demande d'interface d'utilisateur et les présenter à l'utilisateur.

9. Système de traitement de normalisation de formulaire de rapport, **caractérisé en ce que** le système comprend un serveur de système de normalisation et un ou plusieurs serveurs de formulaire de rapport, dans lequel le serveur de système de normalisation est le dispositif pour le traitement de normalisation de formulaire de rapport selon une quelconque des revendications 6 à 8.
